(19) Europäisches Patentamt / European Patent Office / Office européen des brevets

(11) **EP 2 185 980 B1**

(12) **EUROPÄISCHE PATENTSCHRIFT**

(45) Veröffentlichungstag und Bekanntmachung des Hinweises auf die Patenterteilung:
**31.07.2013 Patentblatt 2013/31**

(21) Anmeldenummer: **08787465.7**

(22) Anmeldetag: **26.08.2008**

(51) Int Cl.:
**G05B 13/02** (2006.01)  **G06N 3/04** (2006.01)
**F02C 9/00** (2006.01)

(86) Internationale Anmeldenummer:
**PCT/EP2008/061115**

(87) Internationale Veröffentlichungsnummer:
**WO 2009/033944 (19.03.2009 Gazette 2009/12)**

(54) **VERFAHREN ZUR RECHNERGESTÜTZTEN STEUERUNG UND/ODER REGELUNG MIT HILFE NEURONALER NETZE**

METHOD FOR COMPUTER-AIDED CONTROL AND/OR REGULATION USING NEURAL NETWORKS

PROCÉDÉ DE COMMANDE ET/OU DE RÉGLAGE ASSISTÉ PAR ORDINATEUR À L'AIDE DE RÉSEAUX NEURONAUX

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **06.09.2007 DE 102007042440**

(43) Veröffentlichungstag der Anmeldung:
**19.05.2010 Patentblatt 2010/20**

(73) Patentinhaber: **Siemens Aktiengesellschaft 80333 München (DE)**

(72) Erfinder:
• **SCHNEEGASS, Daniel 1019 HM Amsterdam (NL)**
• **UDLUFT, Steffen 82223 Eichenau (DE)**

(56) Entgegenhaltungen:
**US-B1- 6 882 992**

• **BRAM BAKKER ED - ANONYMOUS: "Reinforcement learning by backpropagation through an LSTM model/critic" APPROXIMATE DYNAMIC PROGRAMMING AND REINFORCEMENT LEARNING, 2007. ADPR L 2007. IEEE INTERNATIONAL SYMPOSIUM ON, IEEE, PI, 1. April 2007 (2007-04-01), Seiten 127-134, XP031095237 ISBN: 978-1-4244-0706-4**

• **VENAYAGAMOORTHY G K ET AL: "Adaptive Critic Designs for Optimal Control of Power Systems" INTELLIGENT SYSTEMS APPLICATION TO POWER SYSTEMS, INTERNATIONAL CONFER ENCE ON, PROCEEDINGS OF THE 13TH NOV. 6-10, 2005, PISCATAWAY, NJ, USA,IEEE, 6. November 2005 (2005-11-06), Seiten 136-148, XP010897199 ISBN: 978-1-59975-174-0**

• **SALMAN MOHAGHEGHI ET AL: "Making the power grid more intelligent" BULK POWER SYSTEM DYNAMICS AND CONTROL - VII. REVITALIZING OPERATIONAL RELIABILITY, 2007 IREP SYMPOSIUM, IEEE, PI, 1. August 2007 (2007-08-01), Seiten 1-10, XP031195591 ISBN: 978-1-4244-1518-2**

• **DANIEL SCHNEEGASS ET AL: "Improving Optimality of Neural Rewards Regression for Data-Efficient Batch Near-Optimal Policy Identification" ARTIFICIAL NEURAL NETWORKS Â ICANN 2007; [LECTURE NOTES IN COMPUTER SCIENCE], SPRINGER BERLIN HEIDELBERG, BERLIN, HEIDELBERG, Bd. 4668, 9. September 2007 (2007-09-09), Seiten 109-118, XP019069348 ISBN: 978-3-540-74689-8**

EP 2 185 980 B1

**Beschreibung**

Die Erfindung betrifft ein Verfahren zur rechnergestützten Steuerung und/oder Regelung eines technischen Systems und ein entsprechendes Computerprogrammprodukt.

Bei der Steuerung von komplexen technischen Systemen ist es oftmals wünschenswert, dass die am technischen System durchzuführenden Aktionen derart gewählt sind, dass ein vorteilhaftes gewünschtes dynamisches Verhalten des technischen Systems erhalten wird. Das dynamische Verhalten kann jedoch bei komplexen technischen Systemen oftmals nicht einfach vorhergesagt werden, so dass entsprechende rechnergestützte Vorhersageverfahren benötigt werden, um das zukünftige Verhalten des technischen Systems abzuschätzen und dementsprechend geeignete Aktionen zur Regelung bzw. Steuerung des technischen Systems zu wählen.

Heutzutage beruht die Steuerung von technischen Systemen oftmals auf Expertenwissen, d.h. die automatische Regelung des Systems wird auf der Basis dieses Expertenwissens erstellt. Es sind jedoch auch Ansätze bekannt, bei denen mit Hilfe von bekannten Methoden des sog. bestärkenden Lernens technische Systeme gesteuert werden. Die bekannten Verfahren sind jedoch nicht allgemein auf beliebige technische Systeme anwendbar und liefern oftmals keine ausreichend guten Ergebnisse.

Aus BRAM BAKKER: "Reinforcement learning by backpropagation through an LSTM model/critic", APPROXIMATE DYNAMIC PROGRAMMING AND REINFORCEMENT LEARNING, 2007. ADPR L 2007. IEEE INTERNATIONAL SYMPOSIUM ON, IEEE, PI, 1. April 2007 (2007-04-01), Seiten 127-134, XP031095237, ISBN: 978-1-4244-0706-4 ist ein Verfahren zur rechnergestützten Steuerung und/oder Regelung eines technischen Systems bekannt, bei dem das dynamische Verhalten des technischen Systems für mehrere Zeitpunkte jeweils durch einen Zustand des technischen Systems und eine am technischen System durchgeführte Aktion charakterisiert wird, wobei eine jeweilige Aktion zu einem jeweiligen Zeitpunkt in einen Folgezustand des technischen Systems zum nächsten Zeitpunkt führt. In diesem Verfahren wird eine Aktionsauswahlregel mit einer Mehrzahl von Datensätzen gelernt, wobei jedem Datensatz eine Bewertung zugeordnet ist. Das Lernen der Aktionsauswahlregel umfasst das Modellieren einer Value-Funktion durch ein erstes neuronales Netz, das die Zustände und Aktionen des technischen Systems als Parameter umfasst. Das Lernen der Aktionsauswahlregel umfasst weiter das Lernen des ersten neuronalen Netzes auf der Basis eines Optimalitätskriteriums, welches von den Bewertungen der Datensätze und der Value-Funktion abhängt, wobei eine in Bezug auf die Vallue-Funktion optimale Aktion durch ein zweites neuronales Netz modelliert wird. Das technische System wird dadurch geregelt und/oder gesteuert, dass die am technischen System durchzuführenden Aktionen mit der gelernten Aktionsauswahlregel basierend auf dem gelernten zweiten neuronalen Netz ($\pi$) ausgewählt werden.

Aufgabe der Erfindung ist es deshalb, ein Verfahren zur rechnergestützten Steuerung und/oder Regelung eines technischen Systems zu schaffen, welches allgemeingültig auf beliebige technische Systeme anwendbar ist und gute Ergebnisse liefert.

In dem erfindungsgemäßen Verfahren wird das dynamische Verhalten eines technischen Systems für mehrere Zeitpunkte betrachtet, wobei das dynamische Verhalten für jeden Zeitpunkt durch einen Zustand des technischen Systems und eine am technischen System durchgeführte Aktion charakterisiert wird, wobei eine jeweilige Aktion zu einem jeweiligen Zeitpunkt in einen Folgezustand des technischen Systems zum nächsten Zeitpunkt führt.

Um eine optimale Steuerung bzw. Regelung des technischen Systems zu erreichen, wird eine Aktionsauswahlregel auf der Basis von Datensätzen gelernt, wobei jeder Datensatz den Zustand des technischen Systems zu einem jeweiligen Zeitpunkt, die in dem Zeitpunkt durchgeführte Aktion sowie den Folgezustand umfasst und wobei jedem Datensatz eine Bewertung zugeordnet ist.

Ein Zustand des technischen Systems ist hierbei insbesondere ein Zustandsvektor mit einer oder mehreren Variablen, wobei die Variablen beispielsweise beobachtete Zustandsgrößen des technischen Systems sind. Analog kann auch eine am technischen System durchzuführende Aktion durch einen entsprechenden Vektor mit einer Mehrzahl von Aktionsvariablen bestehen, wobei die Aktionsvariablen insbesondere einstellbare Parameter am technischen System repräsentieren.

Das erfindungsgemäße Verfahren zeichnet sich durch eine spezielle Variante des Lernens der Aktionsauswahlregel aus, welche folgende Schritte umfasst:

i) Modellieren einer Qualitätsfunktion durch ein erstes neuronales Netz umfassend die Zustände und Aktionen des technischen Systems als Parameter;

ii) Lernen des ersten neuronalen Netzes auf der Basis eines Optimalitätskriteriums, welches von den Bewertungen der Datensätze und der Qualitätsfunktion abhängt, wobei eine in Bezug auf die Qualitätsfunktion optimale Aktion durch ein zweites neuronales Netz modelliert wird, welches basierend auf der Qualitätsfunktion gelernt wird.

Mit einem derartigen Verfahren wird durch geeignetes Lernen des ersten und zweiten neuronalen Netzes auf einfache und effektive Weise eine optimale Aktionsauswahlregel ermittelt, welche von den Bewertungen der Datensätze abhängt, wobei die Aktionsauswahlregel derart ausgestaltet ist, dass in einem Zustand immer möglichst die Aktion mit der besten Bewertung ausgewählt wird. Mit der gelernten Aktionsauswahlregel erfolgt dann die eigentliche Regelung bzw. Steuerung des technischen Systems dadurch, dass am technischen System durchzuführende Aktionen mit der gelernten Aktionswahlregelung basierend auf dem gelernten zweiten neuronalen Netz ausgewählt werden.

Als Optimalitätskriterium wird die Minimierung eines modifizierten Bellman-Residuums verwendet, wobei das modifizierte Bellman-Residuum eine Hilfsfunktion umfasst, welche vom jeweiligen Zustand des technischen Systems und der im jeweiligen Zustand durchführbaren Aktionen abhängt. Eine mögliche Ausgestaltung dieses Bellman-Residuums ist in der detaillierten Beschreibung der Anmeldung beschrieben. Das modifizierte Bellman-Residuum ist dort als $L_{aux}$ bezeichnet.

Um dieses modifizierte Bellman-Residuum in dem erfindungsgemäßen Verfahren zu verwenden, wird die Hilfsfunktion durch ein drittes neuronales Netz modelliert, welches auf der Basis des Optimalitätskriteriums gelernt wird, wobei das dritte neuronalen Netz ein Feed-Forward-Netz bildet mit einer Eingangsschicht umfassend einen jeweiligen Zustand des technischen Systems und die in dem jeweiligen Zustand durchführbare Aktion, einer oder mehreren versteckten Schichten sowie einer Ausgangsschicht umfassend die Hilfsfunktion. Das Lernen dieses dritten neuronalen Netzes erfolgt in dem erfindungsgemäßen Verfahren hierbei parallel zum Lernen des ersten und zweiten neuronalen Netzes.

Das erfindungsgemäße Verfahren wurde anhand von Testdatensätzen überprüft und es hat sich gezeigt, dass mit dem Verfahren sehr gute Ergebnisse erzielt werden.

Das erfindungsgemäße Verfahren stellt eine Erweiterung des in dem Dokument [1] beschriebenen Verfahrens dar, wobei das Dokument [1] eine deutsche Patentanmeldung ist, welche von der gleichen Anmelderin wie die vorliegende Anmeldung eingereicht wurde. Das Verfahren gemäß der vorliegenden Erfindung hat gegenüber dem Verfahren des Dokuments [1] den Vorteil, dass ein zweites neuronales Netz zum Einsatz kommt, welches die optimale Aktion basierend auf der Qualitätsfunktion lernt, so dass die mit dem Verfahren gelernte Aktionsauswahlregel in einfacher Weise durch ein gelerntes zweites neuronales Netz gegeben ist, mit dem ausgehend von einem Zustand des technischen Systems die optimale Aktion in diesem Zustand berechnet werden kann. Hierdurch ist das Verfahren nicht auf diskrete Aktionen beschränkt, sondern das zweite neuronale Netz kann insbesondere auch kontinuierliche Aktionen modellieren. Darüber hinaus kann mit dem erfindungsgemäßen Verfahren die Dateneffizienz erhöht werden, d.h. bereits mit einer geringeren Menge an Datensätzen können gute Ergebnisse zur geeigneten Steuerung bzw. Regelung des technischen Systems basierend auf einem Optimalitätskriterium erreicht werden.

In einer bevorzugten Ausführungsform des erfindungsgemäßen Verfahrens wird die Qualitätsfunktion durch das erste neuronale Netz derart modelliert, dass eine Bewertungsfunktion an die Bewertungen der Datensätze angepasst wird.

In einer weiteren Ausgestaltung des erfindungsgemäßen Verfahrens wird die in Bezug auf die Qualitätsfunktion optimale Aktion, welche durch das zweite neuronale Netz modelliert wird, derart festgelegt, dass die optimale Aktion die Qualitätsfunktion maximiert.

In einer besonders bevorzugten Ausführungsform des erfindungsgemäßen Verfahrens bildet das erste neuronale Netz ein Feed-Forward-Netz mit einer Eingangsschicht umfassend einen jeweiligen Zustand des technischen Systems und die in dem jeweiligen Zustand durchführbare Aktion, einer oder mehreren versteckten Schichten sowie einer Ausgangsschicht umfassende Qualitätsfunktion. Analog ist das zweite neuronale Netz vorzugsweise ebenfalls als ein Feed-Forward-Netz ausgestaltet, wobei dieses Feed-Forward-Netz folgende Schichten umfasst:

- eine Eingangsschicht umfassend einen jeweiligen Folgezustand des technischen Systems;
- eine oder mehrere versteckte Schichten mit versteckten Variablen;
- eine Ausgangsschicht umfassend die im Folgezustand in Bezug auf die Qualitätsfunktion optimale Aktion.

Die oben genannten Feed-Forward-Netze werden auch als Mehrschicht-Perzeptronen bezeichnet und sind hinlänglich aus dem Stand der Technik bekannte Strukturen von künstlichen neuronalen Netzen.

Zum Lernen des ersten bzw. zweiten neuronalen Netzes in dem erfindungsgemäßen Verfahren wird vorzugsweise das hinlänglich aus dem Stand der Technik bekannte Backpropagation-Verfahren eingesetzt.

Das Optimalitätskriterium kann in dem erfindungsgemäßen Verfahren verschieden gewählt werden, wobei vorzugsweise dasjenige Optimalitätskriterium verwendet wird, das ein optimales dynamisches Verhalten des technischen Systems parametrisiert. Mögliche Optimalitätskriterien sind beispielsweise die Minimierung des Bellman-Residuums bzw. das Erreichen des Fixpunktes der Bellman-Iteration. Das Bellman-Residuum bzw. die Bellman-Iteration sind dem Fachmann auf dem Gebiet des bestärkenden Lernens (englisch Reinforcement Learning) bekannt und werden deshalb an dieser Stelle nicht mehr erläutert.

In einer besonders bevorzugten Ausführungsform des erfindungsgemäßen Verfahrens umfasst das Optimalitätskriterium ei nen einstellbaren Parameter, durch dessen Veränderung das Optimalitätskriterium angepasst wird. Hierdurch wird eine flexible Möglichkeit geschaffen, das erfindungsgemäße Verfahren auf das für den vorgegebenen Datensatz am besten geeignete Optimalitätskriterium anzupassen.

In einer weiteren Ausführungsform des erfindungsgemäßen Verfahrens kann auch die Historie von vergangenen Zuständen und Aktionen des technischen Systems in geeigneter Weise berücksichtigt werden. Dies erfolgt dadurch, dass die Zustände in den Datensätzen versteckte Zustände des technischen Systems sind, welche durch ein rekurrentes neuronales Netz mit Hilfe von Ursprungsdatensätzen generiert werden, wobei die Ursprungsdatensätze jeweils einen beobachteten Zustand des technischen Systems, eine in dem beobachteten Zustand durchgeführte Aktion sowie den daraus resultierenden Folgezustand umfassen. Mit dem rekurrenten neuronalen Netz wird insbesondere das dynamische Verhalten des technischen Systems modelliert, wobei das rekurrente neuronale Netz gebildet ist durch wenigstens eine Eingangsschicht umfassend die beobachteten Zustände des technischen Systems und die am technischen System durchgeführten Aktionen, wenigstens eine versteckte rekurrente Schicht umfassend die versteckten Zustände des technischen Systems und wenigstens eine Ausgangsschicht umfassend die beobachteten Zustände des technischen Systems. Das rekurrente neuronale Netz wird wiederum mit einem geeigneten Lernverfahren gelernt, insbesondere auch mit dem bekannten Back-propagation-Verfahren.

Mit dem erfindungsgemäßen Verfahren können beliebige technische Systeme gesteuert und geregelt werden, ein bevorzugter Anwendungsbereich sind jedoch Turbinen, insbesondere Gasturbinen. Bei der Steuerung bzw. Regelung einer Gasturbine sind die Zustände des technischen Systems und/oder die in den jeweiligen Zuständen durchführbaren Aktionen eine oder mehrere der folgenden Größen:

Gesamtleistung der Gasturbine; ein oder mehrere Drucke und/oder Temperaturen in der Gasturbine oder in der Umgebung der Gasturbine; Brennkammerbeschleunigungen in der Gasturbine; ein oder mehrere Einstellparameter in der Gasturbine, insbesondere Ventileinstellungen und/oder Kraftstoffverhältnisse und/oder Vorleitschaufelstellungen.

Neben dem oben beschriebenen Verfahren betrifft die Erfindung ferner ein Computerprogrammprodukt mit einem auf einem maschinenlesbaren Träger gespeicherten Programmcode zur Durchführung des erfindungsgemäßen Verfahrens, wenn das Programm auf einem Rechner abläuft.

Ausführungsbeispiele der Erfindung werden nachfolgend anhand der beigefügten Figuren detailliert beschrieben.

Es zeigen:

Fig. 1    eine schematische Darstellung einer ersten Ausführungsform des erfindungsgemäßen Verfahrens; und

Fig. 2    eine schematische Darstellung einer zweiten Ausführungsform des erfindungsgemäßen Verfahrens.

Die nachfolgend beschriebenen Ausführungsformen des erfindungsgemäßen Verfahrens beruhen auf einer Menge von Datensätzen, welche für ein beliebiges technisches System beobachtet, d.h. gemessen bzw. experimentell ermittelt wurden. Ein besonders bevorzugter Anwendungsfall eines technischen Systems ist dabei die Steuerung einer Gasturbine, für die Daten in der Form von Zustandsgrößen der Turbine vorliegen, beispielsweise die Gesamtleistung der Gasturbine, ein oder mehrere Drucke und/oder Temperaturen in der Gasturbine, Brennkammerbeschleunigungen und dergleichen. Es liegen hierbei Datensätze zu einer Vielzahl von aufeinander folgenden Zeitpunkten vor, wobei jeder Datensatz charakterisiert ist durch einen Zustand, der üblicherweise ein Zustandsvektor mit einer Mehrzahl von Zustandsgrößen ist, durch eine Aktion, welche die Veränderung von Zustandsgrößen oder anderen einstellbaren Parametern des technischen Systems repräsentiert, sowie durch einen Folgezustand, der die Werte der Zustandsgrößen nach Durchführung der Aktion wiedergibt. Darüber hinaus liegt für jeden Datensatz eine Bewertung bzw. Belohnung vor, welche die Güte der Aktion zum jeweiligen Zeitpunkt für die Steuerung des technischen Systems wiedergibt. Die Bewertung ist hierbei vorzugsweise derart ausgestaltet, dass die beste bzw. optimale Steuerung des technischen Systems durch Aktionen mit hohen Bewertungen bzw. Belohnungen zu den verschiedenen Zeitpunkten während des Betriebs des technischen Systems erreicht wird.

In den nachfolgend beschriebenen Ausführungsformen des erfindungsgemäßen Verfahrens wird nunmehr anhand der beobachteten Datensätze des technischen Systems mit einem bestärkenden Lernverfahren (englisch Reinforcement Learning) eine Aktionsauswahlregel gelernt, mit der anschließend das technische System in geeigneter Weise betrieben werden kann. Die Aktionsauswahlregel gibt dabei für einen Zustand des technischen Systems an, welches die beste, in diesem Zustand durchzuführende Aktion ist. Das technische System wird hierbei als ein stochastisches dynamisches System betrachtet, wobei das bestärkende Lernverfahren zur Ermittlung der Aktionsauswahlregel als eine Regressionsaufgabe betrachtet wird, bei der eine Belohnungsfunktion an die beobachteten Datensätze angepasst wird.

In dem nachfolgend beschriebenen Lernverfahren wird nach der Aktionsauswahlregel gesucht, welche optimal zur Steuerung des technischen Systems eingesetzt werden kann. Mathematisch werden hierbei die Zustände, die Aktionen und die Folgezustände als Beobachtungen eines sog. Markov-Entscheidungsprozesses betrachtet. Ein Markov-Entscheidungsprozess ist allgemein gegeben durch einen Zustandsraum S, eine Menge von Aktionen A, die in den unterschiedlichen Zuständen ausgewählt werden können, und der Dynamik, welche als Übergangs-Wahrscheinlichkeits-Verteilung $P_T$: $S \times A \times S \to$ [0,1] betrachtet wird, die von dem momentanen Zustand s, der gewählten Aktion a und dem Folgezustand s' abhängt. Der Übergang von einem Zustand zum Folgezustand wird durch sog. Belohnungen R(s, a,s') charakterisiert, welche Funktionen des momentanen Zustands, der Aktion und des Folgezustands sind. Die Belohnungen werden durch eine Belohnungs-Wahrscheinlichkeits-Verteilung $P_R$ mit dem Erwartungswert der Belohnung

$$\mathbf{E}R = \int_{\Re} r P_R(s, a, s', r) dr, s, s' \in S, a \in A$$

definiert.

Gemäß der nachfolgend beschriebenen Ausführungsform des erfindungsgemäßen Verfahrens wird nach dem Maximum einer diskontierenden Q-Funktion gesucht, welche der Qualitätsfunktion im Sinne der Ansprüche entspricht und durch die hinlänglich aus dem Stand der Technik bekannte Bellman-Gleichung wie folgt definiert ist:

$$Q^{\pi}(s,a) = \mathbf{E}_{s'}\left(R(s,a,s') + \gamma Q^{\pi}(s', \pi(s'))\right) \qquad (1).$$

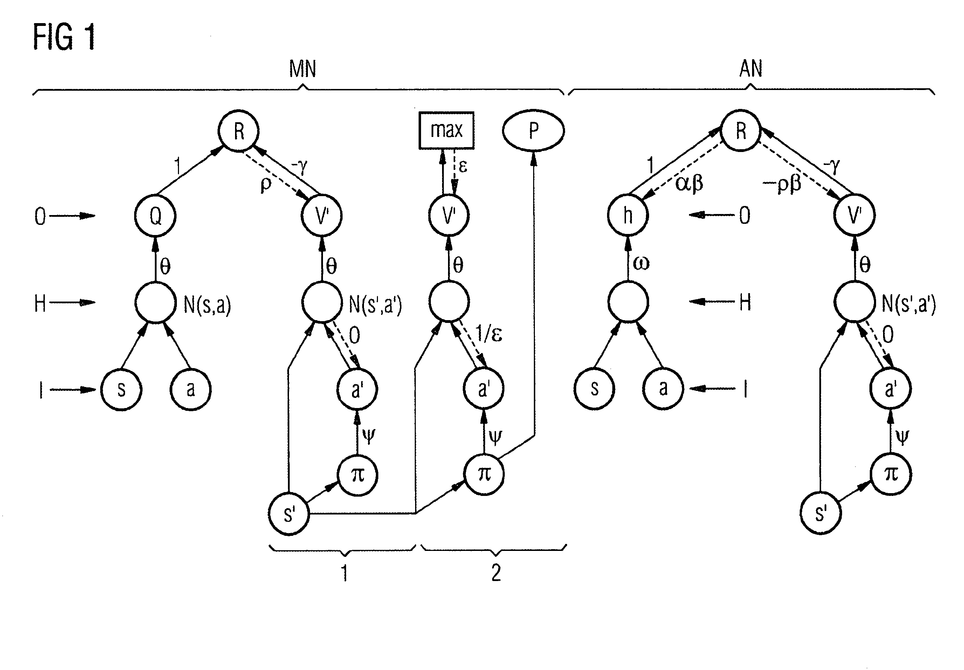

Die Maximierung erfolgt hierbei im sog. Regelraum $\Pi = (S \to A)$ über alle möglichen Zustände s und Aktionen a, wobei $0 < \gamma < 1$ der Diskontierungsfaktor ist, s' der Folgezustand von s ist und $\pi \in \Pi$ die verwendete Aktionsauswahlregel ist. Die Maximierung wird gemäß der hier beschriebenen Erfindung mit einem auf neuronalen Netzen beruhenden Regressionsverfahren durchgeführt, welches einen auf der optimalen Aktionsauswahlregel (d.h. auf der Auswahlregel, welche die Q-Funktion maximiert) beruhenden Gradienten verwendet und auch als "Policy Gradient Neural Rewards Regression" bzw. Policy-Gradienten-Regression bezeichnet wird. Dabei wird nicht - wie in dem Verfahren gemäß dem Dokument [1] - explizit nach diskreten Aktionen gesucht, welche die Qualitätsfunktion maximieren. Stattdessen wird die bereits zuvor als optimal angenommene Aktion als Eingabe für die Q-Funktion verwendet, wobei die optimale Aktion basierend auf einem neuronalen Feed-Forward-Netz berechnet wird. Die Architektur des verwendeten Verfahrens ist in Fig. 1 gezeigt und wird weiter unten näher erläutert.

In den nachfolgend beschriebenen Ausführungsformen des erfindungsgemäßen Verfahrens wird ein technisches System betrachtet, bei dem sowohl die Zustände des Systems als auch die in einem jeweiligen Zustand durchführbaren Aktionen kontinuierlich sind. Die Dynamik des Systems ist dabei probabilistisch.

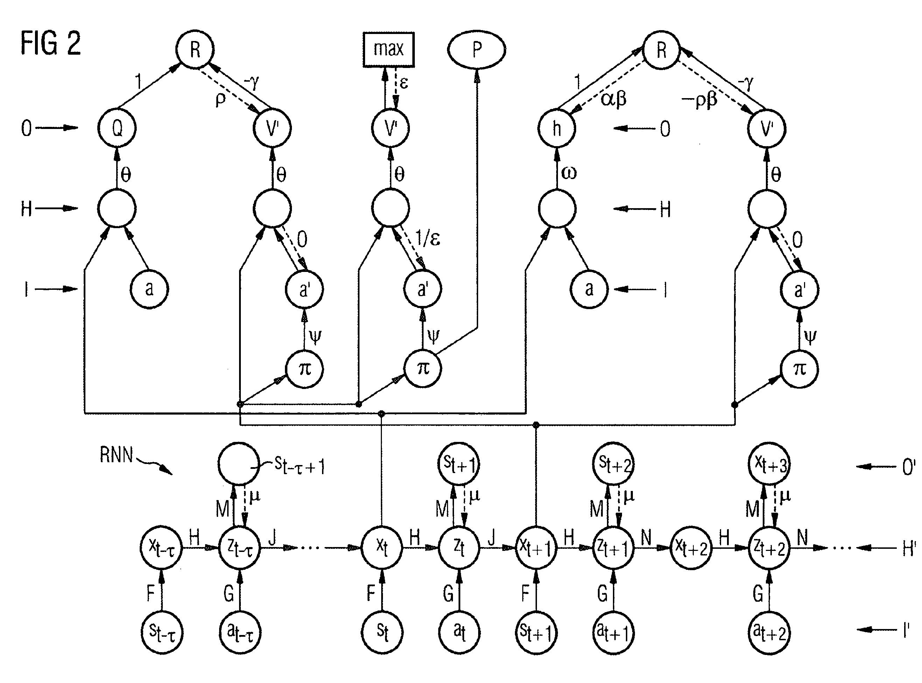

In den Ausführungsformen der Fig. 1 und Fig. 2 wird die oben beschriebene Q-Funktion durch ein einzelnes Feed-Forward-Netz bzw. ein Mehrschicht-Perzeptron N(s,a)=Q(s,a) beschrieben, umfassend eine Eingangsschicht I mit dem Zustand s und der Aktion a, eine versteckte Schicht H sowie eine Ausgangsschicht O mit der Qualitätsfunktion Q. Zur Modellierung der Belohnungsfunktion nach Gleichung (1) wird der hinlänglich aus dem Stand der Technik bekannte Backpropagation-Algorithmus verwendet, wobei das Optimierungsproblem durch die Minimierung eines modifizierten (quadratischen) Bellman-Residuums über alle 1 beobachteten Übergänge gelöst wird. 1 ist somit die Anzahl an Datensätzen in den beobachteten Daten des technischen Systems. Das in der hier beschriebenen Ausführungsform verwendete modifizierte Bellman-Residuum beruht auf der Druckschrift [2] und ist eine bessere Approximation des wahren Bellman-Residuums. Es wird im Folgenden auch als Hilfs-Residuum $L_{aux}$ bezeichnet und lautet wie folgt:

$$L_{aux} = L - \hat{L} + \Omega(\theta) =$$
$$= \sum_{i=1}^{l}(Q(s_i, a_i) - \gamma Q(s_{i+1}, \pi(s_{i+1})) - r_i)^2 - \sum_{i=1}^{l}(h(s_i, a_i) - \gamma Q(s_{i+1}, \pi(s_{i+1})) - r_i)^2 + \Omega(\theta)$$

$$(2)$$

Dabei repräsentiert θ die Parameter des künstlichen neuronalen Feed-Forward-Netzes N(s,a) und umfasst insbesondere die Gewichtsmatrizen zwischen den einzelnen Neuronenschichten in dem Feed-Forward-Netz. Q ist ein geeigneter Regularisierungsterm. $r_i$ stellt die beobachtete Belohnung bzw. Bewertung in einem Zustand $s_i$ aus den Datensätzen dar, und $s_{i+1}$ sind erwartungstreue Schätzer der Zustandsgrößen des Folgezustands.

Es ist bekannt, dass die Minimierung des Bellman-Residuums einerseits den Vorteil hat, dass es ein gut steuerbares Lernproblem darstellt, da es mit dem Schema des überwachten Lernens verwandt ist. Andererseits neigt die Minimierung des Bellman-Residuums dazu, Terme höherer Ordnung der diskontierten Summe der zukünftige Belohnungen im stochastischen Fall zu minimieren, falls keine weiteren unkorrelierten Datensätze für jeden Übergang gegeben werden können. Im Allgemeinen sind die Lösungen für Q-Funktionen vorurteilsbehaftet, welche glatter für Folgezustände der stochastischen Übergänge sind. Wenn $S_{i+i}$ und $r_i$ erwartungstreue Abschätzungen für nachfolgende Zustände bzw. Belohnungen sind, ist der Ausdruck $(Q(s_i, a_i)-\gamma V(s_{i+1})-r_i)^2$ keine erwartungstreue Abschätzung für das wahre quadratische Bellman-Residuum $(Q(s,a)-(TQ)(s,a))^2$, sondern für $(Q(s,a)-(TQ)(s,a))^2+(T'Q)(s,a)^2$. T und T' sind hierbei wie folgt definiert:

$$(TQ)(s,a) = \mathbf{E}_{s'}\left(R(s,a,s') + \gamma \max_{a'} Q(s',a')\right)$$

$$(T''Q)(s,a)^2 = \mathbf{Var}_{s'}\left(R(s,a,s') + \gamma \max_{a'} Q(s',a')\right)$$

T wird auch als Bellman-Operator bezeichnet.

Als Alternative zu einer Verwendung von doppelten Trajektorien wird obiges modifiziertes Bellman-Residuum aus dem Dokument [2] als bessere Approximation des wahren Bellman-Residuums verwendet. Die Optimierungsaufgabe ist somit die Lösung

$$\hat{Q} = \arg\min_{Q \in H_Q} \max_{h \in H_h} L_{aux} .$$

Die Idee des modifizierten Bellman-Residuums ist das Auffinden eines h, welches den Bellman-Operator über die Beobachtungen approximiert.

Man erhält somit:

$$Z = \mathbf{E}_{s'}\left(Q(s,a) - \gamma V(s') - R(s,a,s')\right)^2 - \mathbf{E}_{s'}\left(h(s,a) - \gamma V(s') - R(s,a,s')\right)^2$$
$$= \left(Q(s,a) - (TQ)(s,a)\right)^2 - \mathbf{Err}\left(h(s,a),(TQ)(s,a)\right).$$

Es handelt sich hierbei um die wahre Verlustfunktion mit einem zusätzlichen Fehlerterm aufgrund der suboptimalen Approximation von h, falls $H_h$ nicht in der Lage ist, den Bellman-Operator beliebig genau zu approximieren.

Diese Technik ermöglicht es, das wahre Bellman-Residuum nach oben zu begrenzen, falls der Fehler von h in Bezug auf TQ begrenzt werden kann. Man erkennt leicht, dass $\hat{L} \leq L$ gilt innerhalb eines Sattelpunkts von $L_{aux}$, falls $H_Q = H_h$. Ansonsten würde h nicht das Minimum von $\hat{L}$ bereitstellen. Deshalb würde ein Optimum von $L_{aux}$ durch jeden Fixpunkt der Bellman-Iteration bereitgestellt werden, falls dieser Punkt existiert, da nur in diesem Fall Q den Bellman-Operator so gut wie h approximieren kann und $L_{aux} = 0$ gilt. Im Unterschied zum Vorschlag der Druckschrift [2] wurde in der hier beschriebenen Ausführungsform der Erfindung $H_h$ entweder als eine deutlich mächtigere Funktionsklasse als $H_Q$ gewählt oder unter Berücksichtigung von Vorwissen über den wahren Bellman-Operator, so dass $\hat{L}$ im Wesentlichen eine bessere Abschätzung von $T'Q^2$ liefert. Da eine solche Abschätzung der Varianz immer noch nicht erwartungstreu ist, konvergiert das Verfahren auf einen nicht erwartungstreuen Abschätzer des wahren Bellman-Residuums, der die Funktion $\hat{Q}^* \in H_Q$ nur innerhalb des Funktionsraums minimiert, jedoch offensichtlich eine bessere Approximation als aus dem Stand der Technik bekannte Abschätzer liefern.

Aus dem obigen Bellman-Residuum $L_{aux}$ gemäß Gleichung (2) ergeben sich folgende Gradienten $\Delta\theta$, $\Delta\omega$ und $\Delta\psi$, welche die Ableitungen des Residuums $L_{aux}$ nach $\theta, \omega$ bzw. $\psi$ darstellen und deren Nullstelle zur Lösung der Optimierungsaufgabe zu bestimmen ist:

$$\Delta\theta = \sum_{i=1}^{I}\left((Q(s_i,a_i) - \gamma Q(s_{i+1},\pi(s_{i+1})) - r_i)\cdot\right.$$

$$\frac{d}{d\theta}(Q(s_i,a_i) - \rho\gamma Q(s_{i+1},\pi(s_{i+1}))) - \frac{\varepsilon d}{d\theta}Q(s_{i+1},\pi(s_{i+1}))$$

$$\left. + \beta\rho\gamma(h(s_i,a_i) - \gamma Q(s_{i+1},\pi(s_{i+1})) - r_i)\frac{d}{d\theta}Q(s_{i+1},\pi(s_{i+1}))\right) + \frac{d\Omega(\theta)}{d\theta} \qquad (3)$$

$$\Delta\omega = \alpha\beta\sum_{i=1}^{I}(h(s_i,a_i) - \gamma Q(s_{i+1},\pi(s_{i+1})) - r_i)\frac{d}{d\omega}h(s_i,a_i) \qquad (4)$$

$$\Delta\psi = -\sum_{i=1}^{I}\frac{d}{\varepsilon d\psi}\pi(s_{i+1})\frac{\varepsilon d}{d\pi(s_{i+1})}Q(s_{i+1},\pi(s_{i+1})) = -\sum_{i=1}^{I}\frac{d}{d\psi}Q(s_{i+1},\pi(s_{i+1})) \qquad (5)$$

$\omega$ sind hierbei die entsprechenden Parameter, welche die Hilfsfunktion h beschreiben, die als Feed-Forward-Netz modelliert wird, $0 \le \beta \le 1$ dient zur Steuerung des Einflusses der Hilfsfunktion h und $\alpha \ge 1$ ist die Stärke der Optimierung von h im Vergleich zu Q. $\psi$ stellt den Parameter eines Feed-Forward-Netzes $\pi$ dar (Fig. 1), welches zur Modellierung der optimalen Auswahlregel verwendet wird. Anstatt dieses modifizierten Bellman-Residuums $L_{aux}$ kann auch das normale Bellman-Residuum bzw. das Erreichen des Fixpunkts der Bellman-Gleichung zur Lösung des Optimierungsproblems verwendet werden. In diesem Fall entfällt die obige Gleichung (4) und in der Gleichung (3) tritt nicht mehr der mit den Faktoren $\beta\rho\gamma$ beginnende Term auf. Der Parameter $\beta$ erlaubt auch einen gleitenden Übergang. Man erhält dann für $\rho = 1$ das Optimalitätskriterium gemäß der klassischen Minimalisierung des Bellman-Residuums, wohingegen man für $\rho = 0$ das Erreichen des Fixpunktes der Bellman-Iteration erhält.
In der hier beschriebenen Ausführungsform wird die Funktion h in die Architektur gemäß Fig. 1 durch Einfügen des Hilfsnetzes AN neben dem Hauptnetz MN erreicht. Das Hilfsnetz AN modelliert die Funktion h mit einem neuronalen Netz, welches analog zum Netz N(s,a) eine Eingangsschicht I umfassend den Zustand s und die Aktion a, eine versteckte Schicht H und eine Ausgangsschicht O umfassend die Funktion h aufweist. Das Hilfsnetz AN erfüllt zwei Aufgaben, es maximiert $\hat{L}$ in Bezug auf $\theta$ und minimiert $\hat{L}$ in Bezug auf $\omega$. Das Hauptnetz MN sowie das Hilfsnetz AN werden hierbei gleichzeitig gelernt.
Die in Fig. 1 dargestellte Architektur des Hauptnetzes MN gibt die in der Erfindung verwendete Policy-Gradienten-Regression wieder. Das Hauptnetz MN besteht aus einem linken Teil, der die Qualitätsfunktion Q als ein einzelnes neuronales Netz N(s,a) modelliert. Die Zustände s und die Aktionen a sind hierbei kontinuierlich. Der linke Teil des Netzes ist mit dem rechten Teil über die Belohnungsfunktion R gekoppelt, wobei der Gradientenfluss durch die Parameter -y und $\rho$ gesteuert wird, welche in der obigen Gradienten-Gleichung (3) auftreten. Im rechten Teil des Hauptnetzes MN findet sich in den Zweigen 1 und 2 die optimale Aktionsauswahlregel P als neuronales Netz $\pi$ mit entsprechenden Parametern $\psi$ sowie das neuronale Netz N(s',a') für den Folgezustand. Die Parameter $\psi$ des neuronalen Netzes $\pi$ werden in Bezug auf die optimale Auswahlregel P gelernt. Die optimale Auswahlregel ist hierbei die Maximierung der Qualitätsfunktion Q. V' in Fig. 1 steht hierbei für $V(s')=Q(s',\pi(s'))$ und spiegelt die maximale Q-Funktion für den Folgezustand s' und die Folgeaktion a' wieder. Der Zweig 2 des rechten Teils des Hauptnetzes MN zeigt die Maximierung der Q-Funktion in Bezug auf den $\varepsilon$-Term gemäß obiger Gleichung (5). Ein ausreichend kleines $\varepsilon$ ermöglicht, dass die Regel P nur zur Maximierung der Q-Funktion beiträgt.
Gemäß Fig. 1 ergibt sich somit ein Verfahren, bei dem ein einzelnes neuronales Netz N(s,a) für kontinuierliche Zustände s und Aktionen a verwendet wird. Für die Folgezustände wird $Q(s',\pi(s'))$ berechnet, wobei angenommen wird, dass $\pi: S \to A$ mit den Parametern $\psi$ dazu neigt, die optimale Regel P durchzuführen, d.h. die Q-Funktion zu maximieren. Somit liegt $Q(s',\pi(s'))$ in der Nähe von $\max_{a'} Q(s',a')$. Dies wird durch die Maximierung der Q-Funktion für die Folgezustände gleichzeitig mit der Regression in Bezug auf die Belohnungen erreicht. Somit wird eine Art von Batch On-Policy-Iteration oder eine Batch Actor-Critic-Iteration durchgeführt, in denen die intrinsische Wechselwirkung zwischen der Q-Funktion und der Regel P verwendet wird. Es wird hierbei die aus dem Stand der Technik bekannte Gradientenfluss-Steuertechnik in Verbindung mit Shared Weights eingesetzt, wobei diese Technik ausreichend ist, um die geeignete Architektur zu konstruieren. Im Netzwerkteil für den Folgezustand, der in Fig. 1 mit dem Bezugzeichen 1 dargestellt ist, wird der Gradientenfluss durch das Netzwerk abgeschnitten, was mit der Zahl 0 bei dem gestrichelten, auf die Aktion a' weisenden Pfeil angedeutet ist. Somit beeinflusst die Regel P nicht die Regression bezüglich der Belohnungen. In einem erweiterten Netwerkteil, der in Fig. 1 mit dem Bezugszeichen 2 bezeichnet ist, wird durch ein ausreichend kleines ε ermöglicht, dass nur die Regel P zur Maximierung der Q-Funktion beiträgt. Zur Berechnung der optimalen Auswahlregel π wird ein hinlänglich aus dem Stand der Technik bekanntes Back-Propagation-Verfahren mit Shared Weights eingesetzt. Darüber hinaus kommt die Gradientenrückfluss-Sperrtechnik zum Einsatz, welche von den Erfindern entwickelt wurde und bereits publiziert wurde. Die Gradientenrückfluss-Sperrtechnik gehört somit zum Stand der Technik und ist dem Fachmann hinlänglich bekannt. Sie wird deshalb an dieser Stelle nicht näher erläutert. Nach der Konvergenz des Back-Propagation-Verfahrens kann die optimale Auswahlregel mit Hilfe des Feed-Forward-Netzes π bestimmt werden, ohne dass die Q-Funktion als Zwischenergebnis verwendet wird.

Das oben beschriebene Verfahren berücksichtigt nicht die Historie von vergangenen Zuständen, was dazu führt, dass die Funktionsweise nicht garantiert werden kann, falls kein Markov-Entscheidungsprozess vorliegt. In einer zweiten Ausführungsform des erfindungsgemäßen Verfahrens kann diese Historie jedoch mitberücksichtigt werden. Dies geschieht dadurch, dass der Datensatz, der zum Lernen der neuronalen Netze verwendet wird, selbst wiederum aus einem Ursprungsdatensatz erzeugt wurde. Der Ursprungsdatensatz ist hierbei der Datensatz, der in der Ausführungsform der Fig. 1 direkt zum Lernen der neuronalen Netze eingeflossen ist. In der zweiten Ausführungsform, welche in Fig. 2 gezeigt ist, wird dieser Ursprungsdatensatz nunmehr zur Modellierung des dynamischen Verhaltens des technischen Systems mit einem rekurrenten neuronalen Netz RNN verwendet, welches eine Eingangsschicht I', eine verstreckte Schicht H' und eine Ausgangsschicht O' umfasst. Dieses neuronale Netz umfasst die internen Zustände $x_t, z_t$, $t \in t - \tau, ..., t +1$ sowie die Gewichtsmatrizen F, G, H, J. Die Übergänge zwischen den Zuständen sind hierbei durch folgende Gleichungen definiert:

$$\mathbf{x}_t = \tanh\left(F\mathbf{s}_t + J\mathbf{z}_{t-1}\right)$$

$$\mathbf{z}_t = Ga_t + H\mathbf{x}_t$$

Mittels einer Matrix M, welche den internen auf den externen Zustand abbildet, kann der Folgezustand durch Erfüllen folgender Bedingung erreicht werden:

$$\left\|M\mathbf{z}_t - \mathbf{s}_{t+1}\right\|^2 = \min.$$

Mit bekannten Algorithmen werden gemäß den obigen Gleichungen die Parameter des rekurrenten neuronalen Netzes (d.h. die Gewichtsmatrizen des Netzes) derart bestimmt, dass das rekurrente neuronale Netz sehr gut die beobachteten Datensätze im jeweiligen Zeitpunkt generiert. Das rekurrente neuronale Netz wird dabei wiederum mit einem hinlänglich aus dem Stand der Technik bekannten Back-Propagation-Verfahren gelernt. Die Modellierung des dynamischen Verhaltens mittels des rekurrenten neuronalen Netzes RNN ist dem Fachmann hinlänglich bekannt und wird deshalb nicht im Detail erläutert. Im Unterschied zum Verfahren der Fig. 1 fließen nunmehr die versteckten Zustände $x_t$ bzw. $x_{t+1}$ als Eingangsgrößen in die Eingangsschicht I anstatt der Zustände s bzw. s' ein. Ansonsten entspricht das Lernverfahren der Fig. 2 dem Lernverfahren der Fig. 1, was daraus ersichtlich wird, dass der Teil oberhalb des rekurrenten neuronalen Netzes RNN identisch mit Fig. 1 ist. Es wird deshalb auf eine nochmalige Beschreibung des Lernens der neuronalen Netze verzichtet. In dem rekurrenten neuronalen Netz gemäß Fig. 2 fließt ferner noch ein Parameter μ ein, mit dem die Lernrate des rekurrenten neuronalen Netzes im Vergleich zur Lernrate der einzelnen Feed-Forward-Netze angepasst wird. Darüber hinaus werden Matrizen N verwendet, welche weiter unten noch beschrieben werden.

Die in Fig. 2 gezeigte Architektur ermöglicht es, nur ein rekurrentes neuronales Netz sowohl für die Q-Funktion als auch für die Wertefunktion zu verwenden. Das rekurrente neuronale Netz ist hierbei in der Lage, ein deterministisches dynamisches System beliebig genau zu approximieren, was jedoch für ein stochastisches dynamisches System nicht möglich ist. Dies stellt jedoch keine Beschränkung dar, da die Konstruktion des internen versteckten Zustands als eine Transformation in einen geeigneten Merkmalsraum für das stochastische bestärkende Lernverfahren durch die Feed-Forward-Netze angesehen werden kann. Im deterministischen Fall ist dieser Merkmalsraum identisch mit der exakten Beschreibung aller Information, welche die Zukunft bestimmt, wohingegen im allgemeinen stochastischen Fall der interne Zustand derart generiert werden muss, dass die erwartete Zukunft vorhergesagt wird. Deshalb wird in dem rekurrenten neuronalen Netz aus Fig. 2 ein autonomer Zukunftsanteil verwendet, wenn interne Zustände ohne Beobachtungen aus dem Markov-Prozess vorhergesagt werden. In Fig. 2 sind dies die Zustände $\mathbf{x}_t$ für t > i+1 und es gilt:

$$\mathbf{x}_t = \tanh\left(N\mathbf{z}_{t-1}\right), t > i+1 .$$

Dies ist ausreichend, da die Markov-Eigenschaft durch das Wissen über die erwarteten zukünftigen Zustände rekonstruiert werden kann. Durch die oben beschriebene rekurrente Architektur gemäß Fig. 2 wird die automatische Rekonstruktion eines zu Grunde liegenden Markov-Prozesses prinzipiell beliebiger Ordnung ermöglicht. Der Anwender des erfindungsgemäßen Verfahrens kann somit mehr Informationen aus den Daten nutzen und muss weniger Experteninformationen zur Verfügung stellen.

Die oben beschriebenen Ausführungsformen gemäß Fig. 1 und Fig. 2 des erfindungsgemäßen Verfahrens wurden anhand aus dem Stand der Technik bekannter Problemstellungen getestet. Es hat sich hierbei gezeigt, dass das Verfahren gute Ergebnisse liefert. Insbesondere wurde das Verfahren auch mit dem Verfahren gemäß der Druckschrift [1] verglichen, wobei bessere Ergebnisse mit dem erfindungsgemäßen Verfahren erreicht werden konnten.

Das im Vorangegangenen beschriebene Verfahren bietet einen informationseffizienten Lösungsansatz für allgemeine Optimalsteuerungsprobleme auf beliebigen technischen Gebieten, wobei es möglich ist, mit wenig verfügbaren Datensätzen auch komplexe Steuerungsprobleme zu bewältigen, die sich mit klassischen Verfahren nicht zufriedenstellend lösen lassen.

Literaturverzeichnis:

[1] Deutsche Patentanmeldung 10 2007 017 259.3

[2] Andras Antos, Csaba Szepesvari, Remi Munos. Learning near-optimal policies with bellman-residual minimization based fitted policy iteration and a single sample path. In Proc. of the Conference on Learning Theory, Seiten 574-588, 2006.

**Patentansprüche**

1. Verfahren zur rechnergestützten Steuerung und/oder Regelung eines technischen Systems, bei dem:

   a) das dynamische Verhalten des technischen Systems für mehrere Zeitpunkte (t) jeweils durch einen Zustand $(s_t, x_t)$ des technischen Systems und eine am technischen System durchgeführte Aktion $(a_t)$ charakterisiert wird, wobei eine jeweilige Aktion $(a_t)$ zu einem jeweiligen Zeitpunkt (t) in einen Folgezustand $(s_{t+1}, x_{t+1})$ des technischen Systems zum nächsten Zeitpunkt (t+1) führt;
   b) eine Aktionsauswahlregel mit einer Mehrzahl von Datensätzen gelernt wird, wobei jeder Datensatz den Zustand $(s_t, x_t)$ des technischen Systems zu einem jeweiligen Zeitpunkt (t), die in dem Zustand $(s_t, x_t)$ durchgeführte Aktion $(a_t)$ sowie den Folgezustand $(s_{t+1}, x_{t+1})$ umfasst und jedem Datensatz eine Bewertung $(r_i)$ zugeordnet ist, wobei das Lernen der Aktionsauswahlregel folgende Schritte umfasst:

   i) Modellieren einer Qualitätsfunktion (Q(s,a)) durch ein erstes neuronales Netz $(N_a(s))$ umfassend die Zustände $(s_t, x_t)$ und Aktionen $(a_t)$ des technischen Systems als Parameter;
   ii) Lernen des ersten neuronalen Netzes (N(s,a)) auf der Basis eines Optimalitätskriteriums, welches von den Bewertungen $(r_i)$ der Datensätze und der Qualitätsfunktion (Q(s,a)) abhängt, wobei eine in Bezug auf die Qualitätsfunktion (Q(s,a)) optimale Aktion (a') durch ein zweites neuronales Netz ($\pi$) modelliert wird, welches basierend auf der Qualitätsfunktion gelernt wird;

   c) das technische System dadurch geregelt und/oder gesteuert wird, die am technischen System durchzuführenden Aktionen $(a_t)$ mit der gelernten Aktionsauswahlregel basierend auf dem gelernten zweiten neuronalen Netz ($\pi$) ausgewählt werden;

**EP 2 185 980 B1**

**dadurch gekennzeichnet, dass**

das Optimalitätskriterium die Minimierung eines modifizierten Bellman-Residuums ist, wobei das modifizierte Bellman-Residuum eine Hilfsfunktion (h(s,a)) umfasst, welche vom Zustand ($s_t$, $x_t$) des technischen Systems und der im jeweiligen Zustand ($s_t$, $x_t$) durchführbaren Aktion ($a_t$) abhängt, wobei die Hilfsfunktion durch ein drittes neuronales Netz modelliert wird, welches auf der Basis des Optimalitätskriteriums gelernt wird, wobei das dritte neuronale Netz ein Feed-Forward-Netz bildet mit einer Eingangsschicht (I) umfassend einen jeweiligen Zustand ($s_t$, $x_t$) des technischen Systems und die in dem jeweiligen Zustand ($s_t$, $x_t$) durchführbare Aktion ($a_t$), einer oder mehreren versteckten Schichten (H) sowie einer Ausgangsschicht (O) umfassend die Hilfsfunktion (h(s,a)).

2. Verfahren nach Anspruch 1, bei dem die Qualitätsfunktion (Q(s,a)) durch das erste neuronale Netze (N(s,a)) derart modelliert wird, dass eine Bewertungsfunktion (R(s,a,s')) an die Bewertungen ($r_i$) der Datensätze angepasst wird.

3. Verfahren nach Anspruch 1 oder 2, bei dem die in Bezug auf die Qualitätsfunktion (Q(s,a)) optimale Aktion (a') diejenige Aktion ist, welche die Qualitätsfunktion (Q(s,a)) maximiert.

4. Verfahren nach einem der vorhergehenden Ansprüche, bei dem das erste neuronale Netz (N(s,a)) ein Feed-Forward-Netz bildet mit einer Eingangsschicht (I) umfassend einen jeweiligen Zustand ($s_t$, $x_t$) des technischen Systems und die in dem jeweiligen Zustand ($s_t$, $x_t$) durchführbare Aktion ($a_t$), einer oder mehreren versteckten Schichten (H) sowie einer Ausgangsschicht (O) umfassend die Qualitätsfunktion (Q(s,a)).

5. Verfahren nach einem der vorhergehenden Ansprüche, bei dem das zweite neuronale Netz ($\pi$) ein Feed-Forward-Netz bildet mit einer Eingangsschicht umfassend einen jeweiligen Folgezustand ($s_{t+1}$, $x_{t+1}$) des technischen Systems, einer oder mehreren versteckten Schichten (H) sowie einer Ausgangsschicht (O) umfassend die im Folgezustand ($s_{t+1}$, $x_{t+i}$) in Bezug auf die Qualitätsfunktion (Q(s,a)) optimale Aktion (a').

6. Verfahren nach einem der vorhergehenden Ansprüche, bei dem ein Backpropagation-Verfahren zum Lernen des ersten neuronalen Netzes (N(s,a)) sowie des zweiten neuronalen Netzes ($\pi$) verwendet wird.

7. Verfahren nach einem der vorhergehenden Ansprüche, bei dem das Optimalitätskriterium derart gewählt ist, dass ein optimales dynamisches Verhalten des technischen Systems parametrisiert wird.

8. Verfahren nach einem der vorhergehenden Ansprüche, bei dem das Optimalitätskriterium die Minimierung des Bellman-Residuums ist.

9. Verfahren nach einem der vorhergehenden Ansprüche, bei dem das Optimalitätskriterium das Erreichen des Fixpunktes der Bellman-Iteration ist.

10. Verfahren nach einem der vorhergehenden Ansprüche, bei dem das Optimalitätskriterium einen einstellbaren Parameter ($\rho$) umfasst, durch dessen Veränderung das Optimalitätskriterium angepasst wird.

11. Verfahren nach einem der vorhergehenden Ansprüche, bei dem ein Zustand ($s_t$, $x_t$) des technischen Systems ein oder mehrere Variablen, insbesondere beobachtete Zustandsgrößen des technischen Systems, umfasst und/oder eine am technischen System durchzuführende Aktion ($a_t$) ein oder mehrere Aktionsvariablen umfasst.

12. Verfahren nach einem der vorhergehenden Ansprüche, bei dem die Zustände ($s_t$, $x_t$) in den Datensätzen versteckte Zustände ($x_t$) des technischen Systems sind, welche durch ein rekurrentes neuronales Netz (RNN) mit Hilfe von Ursprungsdatensätzen generiert werden, wobei die Ursprungsdatensätze jeweils einen beobachteten Zustand ($s_t$) des technischen Systems, eine in dem beobachteten Zustand ($s_t$) durchgeführte Aktion ($a_t$) sowie den daraus resultierenden Folgezustand ($s_{t+1}$) umfassen.

13. Verfahren nach Anspruch 12, bei dem durch das rekurrente neuronale Netz (RNN) das dynamische Verhalten des technischen Systems modelliert wird, wobei das rekurrente neuronale Netz (RNN) gebildet ist durch wenigstens eine Eingangsschicht (I') umfassend die beobachteten Zustände ($s_t$) des technischen Systems und die am technischen System durchgeführten Aktionen ($a_t$), wenigstens eine versteckte rekurrente Schicht (H) umfassend die versteckten Zustände ($x_t$) und wenigstens eine Ausgangsschicht (O') umfassend die beobachteten Zustände ($s_t$) des technischen Systems.

14. Verfahren nach Anspruch 13, bei dem das rekurrente neuronale Netz (RNN) mit einem Lernverfahren, insbesondere einem Backpropagation-Verfahren, gelernt wird.

**15.** Verfahren nach einem der vorhergehenden Ansprüche, bei dem das technische System eine Turbine, insbesondere eine Gasturbine, ist.

**16.** Verfahren nach Anspruch 15, bei dem mit dem Verfahren eine Gasturbine geregelt und/oder gesteuert wird, wobei die Zustände ($s_t$, $x_t$) des technischen Systems und/oder die in den jeweiligen Zuständen ($s_t$, $x_t$) durchführbaren Aktionen ($a_t$) eine oder mehrere der folgenden Größen umfassen:

Gesamtleistung der Gasturbine; ein oder mehrere Drucke und/oder Temperaturen in der Gasturbine oder in der Umgebung der Gasturbine; Brennkammerbeschleunigungen in der Gasturbine; ein oder mehrere Einstellparameter an der Gasturbine, insbesondere Ventileinstellungen und/oder Kraftstoffverhältnisse und/oder Vorleitschaufelstellungen.

**17.** Computerprogrammprodukt mit einem auf einem maschinenlesbaren Träger gespeicherten Programmcode zur Durchführung des Verfahrens nach einem der vorhergehenden Ansprüche, wenn das Programm auf einem Rechner abläuft.

**Claims**

**1.** Method for computer-aided control and/or regulation of a technical system, wherein:

a) the dynamic behaviour of the technical system is characterised for a number of time points (t) respectively by a state ($s_t$, $x_t$) of the technical system and an action ($a_t$) carried out on the technical system, a respective action ($a_t$) at a respective time point (t) resulting in a sequential state ($s_{t+1}$, $x_{t+1}$) of the technical system at the next time point (t+1);
b) an action selection rule with a number of data records is learned, each data record comprising the state ($s_t$, $x_t$) of the technical system at a respective time point (t), the action ($a_t$) carried out in the state ($s_t$, $x_t$) and the sequential state ($s_{t+1}$, $x_{t+1}$) and an evaluation ($r_i$) being assigned to each data record, the learning of the action selection rule comprising the following steps:

i) modelling of a quality function (Q(s,a)) by a first neural network ($N_a(s)$) comprising the states ($s_t$, $x_t$) and actions ($a_t$) of the technical system as parameters;
ii) learning the first neural network (N(s,a)) based on an optimality criterion, which is a function of the evaluations ($r_i$) of the data records and the quality function (Q(s,a)), an optimum action (a') in respect of the quality function (Q(s,a)) being modelled by a second neural network ($\pi$), which is learned based on the quality function;

c) the technical system is regulated and/or controlled in that the actions ($a_t$) to be carried out on the technical system are selected using the learned action selection rule based on the learned second neural network ($\pi$)

**characterised in that**
the optimality criterion is the minimization of a modified Bellman residual, the modified Bellman residual comprising an auxiliary function (h(s,a)), which is a function of the state ($s_t$, $x_t$) of the technical system and the action ($a_t$) that can be carried out in the respective state ($s_t$, $x_t$), wherein the auxiliary function is modelled by a third neural network, which is learned on the basis of the optimality criterion, the third neural network forming a feed-forward network with an input layer (I) comprising a respective state ($s_t$, $x_t$) of the technical system and the action ($a_t$) that can be carried out in the respective state ($s_t$, $x_t$), one or more hidden layers (H) and an output layer (O) comprising the auxiliary function (h(s,a)).

**2.** Method according to claim 1, wherein the quality function (Q(s,a)) is modelled by the first neural network (N(s,a)) such that an evaluation function (R(s,a,s')) is tailored to the evaluations ($r_i$) of the data records.

**3.** Method according to claim 1 or 2, wherein the optimum action (a') in respect of the quality function (Q(s,a)) is the action which maximises the quality function (Q(s,a)).

**4.** Method according to one of the preceding claims, wherein the first neural network (N(s,a)) forms a feed-forward network with an input layer (I) comprising a respective state ($s_t$, $x_t$) of the technical system and the action ($a_t$) that can be carried out in the respective state ($s_t$, $x_t$), one or more hidden layers (H) and an output layer (O) comprising the quality function (Q(s,a)).

5. Method according to one of the preceding claims, wherein the second neural network ($\pi$) forms a feed-forward network with an input layer comprising a respective sequential state ($s_{t+1}$, $x_{t+1}$) of the technical system, one or more hidden layers (H) and an output layer (O) comprising the optimum action (a') in the sequential state ($s_{t+1}$, $x_{t+1}$) in respect of the quality function (Q(s,a)).

6. Method according to one of the preceding claims, wherein a backpropagation method is used to learn the first neural network (N(s,a)) and the second neural network ($\pi$).

7. Method according to one of the preceding claims, wherein the optimality criterion is selected such that an optimum dynamic behaviour of the technical system is parameterised.

8. Method according to one of the preceding claims, wherein the optimality criterion is the minimization of the Bellman residual.

9. Method according to one of the preceding claims, wherein the optimality criterion is the reaching of the fixed point of the Bellman iteration.

10. Method according to one of the preceding claims, wherein the optimality criterion comprises an adjustable parameter (p), the change in which causes the optimality criterion to be adapted.

11. Method according to one of the preceding claims, wherein a state ($s_t$, $x_t$) of the technical system comprises one or more variables, in particular observed state variables of the technical system, and/or an action ($a_t$) to be carried out on the technical system comprises one or more action variables.

12. Method according to one of the preceding claims, wherein the states ($s_t$, $x_t$) are states ($x_t$) of the technical system hidden in the data records, which are generated by a recurrent neural network (RNN) with the aid of source data records, the source data records respectively comprising an observed state ($s_t$) of the technical system, an action ($a_t$) carried out in the observed state ($s_t$) and the resulting sequential state ($s_{t+1}$).

13. Method according to claim 12, wherein the dynamic behaviour of the technical system is modelled by the recurrent neural network (RNN), the recurrent neural network (RNN) being formed by at least one input layer (I') comprising the observed states ($s_t$) of the technical system and the actions ($a_t$) carried out on the technical system, at least one hidden recurrent layer (H) comprising the hidden states ($x_t$) and at least one output layer (O') comprising the observed states ($s_t$) of the technical system.

14. Method according to claim 13, wherein the recurrent neural network (RNN) is learned using a learning method, in particular a backpropagation method.

15. Method according to one of the preceding claims, wherein the technical system is a turbine, in particular a gas turbine.

16. Method according to claim 15, wherein the method is used to regulate and/or control a gas turbine, the states ($s_t$, $x_t$) of the technical system and/or the actions ($a_t$) that can be carried out in the respective states ($s_t$, $x_t$) comprising one or more of the following variables:

gross output of the gas turbine; one or more pressures and/or temperatures in the gas turbine or in the area around the gas turbine; combustion chamber accelerations in the gas turbine; one or more adjustment parameters at the gas turbine, in particular valve settings and/or fuel ratios and/or preliminary vane positions.

17. Computer program product with a program code stored on a machine-readable medium for implementing the method according to one of the preceding claims, when the program is running on a computer.

**Revendications**

1. Procédé de commande et/ou de régulation d'un système technique assistées par ordinateur, selon lequel :

   a) le comportement dynamique du système technique est caractérisé, pour plusieurs instants (t), respectivement par un état ($s_t$, $x_t$) du système technique et une action ($a_t$) exécutée sur le système technique, une action respective ($a_t$) à un instant respectif (t) menant à un état subséquent ($s_{t+1}$, $x_{t+1}$) du système technique à l'instant suivant (t+1) ;
   b) une règle de sélection d'actions avec une pluralité de jeux de données est apprise, chaque jeu de données comprenant l'état ($s_t$, $x_t$) du système technique à un instant respectif (t), l'action ($a_t$) effectuée dans l'état ($s_t$, $x_t$) ainsi que l'état subséquent ($s_{t+1}$, $x_{t+1}$), et une évaluation ($r_i$) étant affectée à chaque jeu de données, l'apprentissage de la règle de sélection d'actions comprenant les étapes suivantes :

   i) modélisation d'une fonction de qualité (Q(s,a)) par un premier réseau neuronal ($N_a$(s)) comprenant les états ($s_t$, $x_t$) et les actions ($a_t$) du système technique en tant que paramètres ;
   ii) apprentissage du premier réseau neuronal (N(s,a)) sur la base d'un critère d'optimalité qui dépend des évaluations ($r_i$) des jeux de données et de la fonction de qualité (Q(s,a)), une action (a') optimale par rapport à la fonction de qualité (Q(s,a)) étant modélisée par un deuxième réseau neuronal ($\pi$) qui est appris sur la base de la fonction de qualité ;

   c) le système technique est réglé et/ou commandé par le fait que les actions ($a_t$) à exécuter sur le système technique sont sélectionnées à l'aide de la règle de sélection d'actions qui a été apprise et sur la base du deuxième réseau neuronal appris ($\pi$) ;

   **caractérisé en ce que** le critère d'optimalité est la minimisation d'un résidu de Bellman modifié, le résidu de Bellman modifié comprenant une fonction auxiliaire (h(s,a) qui dépend de l'état ($s_t$, $x_t$) du système technique et de l'action ($a_t$) exécutable dans l'état respectif ($s_t$, $x_t$), la fonction auxiliaire étant modélisée par un troisième réseau neuronal qui est appris sur la base du critère d'optimalité, le troisième réseau neuronal constituant un réseau feed forward avec une couche d'entrée (I) qui comprend un état respectif ($s_t$, $x_t$) du système technique et l'action ($a_t$) exécutable dans l'état respectif ($s_t$, $x_t$), une ou plusieurs couches cachées (H) et une couche de sortie (O) qui comprend la fonction auxiliaire (h(s,a)).

2. Procédé selon la revendication 1, selon lequel la fonction de qualité (Q(s,a)) est modélisée de manière telle, par le premier réseau neuronal (N(s,a)), qu'une fonction d'évaluation (R(s,a,s')) est adaptée aux évaluations ($r_i$) des jeux de données.

3. Procédé selon la revendication 1 ou 2, selon lequel l'action optimale (a') par rapport à la fonction de qualité (Q(s, a)) est celle qui maximise la fonction de qualité (Q (s, a)) .

4. Procédé selon l'une des revendications précédentes, selon lequel le premier réseau neuronal (N(s,a)) constitue un réseau feed forward avec une couche d'entrée (I) qui comprend un état respectif ($s_t$, $x_t$) du système technique et l'action ($a_t$) exécutable dans l'état respectif ($s_t$, $x_t$), une ou plusieurs couches cachées (H) et une couche de sortie (O) qui comprend la fonction de qualité (Q (s, a)) .

5. Procédé selon l'une des revendications précédentes, selon lequel le deuxième réseau neuronal ($\pi$) constitue un réseau feed forward avec une couche d'entrée (I) qui comprend un état subséquent respectif ($s_{t+1}$, $x_{t+1}$ du système technique, une ou plusieurs couches cachées (H) et une couche de sortie (O) qui comprend l'action optimale (a') dans l'état subséquent ($s_{t+1}$, $x_{t+1}$) par rapport à la fonction de qualité (Q(s,a)).

6. Procédé selon l'une des revendications précédentes, selon lequel est utilisé un procédé de rétropropagation pour l'apprentissage du premier réseau neuronal (N(s,a)) et du deuxième réseau neuronal ($\pi$).

7. Procédé selon l'une des revendications précédentes, selon lequel le critère d'optimalité est choisi de manière telle qu'un procédé dynamique optimal du système technique est paramétré.

8. Procédé selon l'une des revendications précédentes, selon lequel le critère d'optimalité est la minimisation du résidu de Bellman.

9. Procédé selon l'une des revendications précédentes, selon lequel le critère d'optimalité est l'obtention du point fixe de l'itération de Bellman.

10. Procédé selon l'une des revendications précédentes, selon lequel le critère d'optimalité comprend un paramètre réglable ($\rho$) par la modification duquel le critère d'optimalité est adapté.

11. Procédé selon l'une des revendications précédentes, selon lequel un état ($s_t$, $x_t$) du système technique comprend une ou plusieurs variables, et plus particulièrement des grandeurs d'état observées du système technique, et/ou une action ($a_t$) à exécuter sur le système technique comprend une ou plusieurs variables d'action.

12. Procédé selon l'une des revendications précédentes, selon lequel les états ($s_t$, $x_t$) sont des états ($x_t$) du système technique cachés dans les jeux de données et générés par un réseau neuronal récurrent (RNN) à l'aide de jeux de données initiales, les jeux de données initiales comprenant chacun un état observé ($s_t$) du système technique, une action ($a_t$) exécutée dans l'état observé ($s_t$) ainsi que l'état subséquent ($s_{t+1}$) qui en résulte.

13. Procédé selon la revendication 12, selon lequel le comportement dynamique du système technique est modélisé par le réseau neuronal récurrent (RNN), le réseau neuronal récurrent (RNN) étant constitué par au moins une couche d'entrée (I') qui comprend les états observés ($s_t$) du système technique et les actions ($a_t$) exécutées sur le système technique, au moins une couche récurrente cachée (H) qui comprend les états cachés ($x_t$) et au moins une couche de sortie (O') qui comprend les états observés ($s_t$) du système technique.

14. Procédé selon la revendication 13, selon lequel le réseau neuronal récurrent (RNN) est appris au moyen d'un procédé d'apprentissage, et plus particulièrement d'un procédé de rétropropagation.

15. Procédé selon l'une des revendications précédentes, selon lequel le système technique est une turbine, et plus particulièrement une turbine à gaz.

16. Procédé selon la revendication 15, selon lequel une turbine à gaz est réglée et/ou commandée par le procédé, les états ($s_t$, $x_t$) du système technique et/ou les actions ($a_t$) exécutables dans les états respectifs ($s_t$, $x_t$) comprenant une ou plusieurs des grandeurs suivantes : puissance totale de la turbine à gaz ; une ou plusieurs pressions et/ou températures dans la turbine à gaz ou dans l'environnement de la turbine à gaz ; accélérations de chambre de combustion dans la turbine à gaz ; un ou plusieurs paramètres de réglage au niveau de la turbine à gaz, et plus particulièrement des réglages de soupapes et/ou des conditions de carburants et/ou des positions d'aubes directrices amont.

17. Produit de programme informatique avec un code de programme stocké sur un support lisible par machine pour exécuter le procédé selon l'une des revendications précédentes lorsque le programme tourne sur un ordinateur.

FIG 1

MN                                       AN

EP 2 185 980 B1

FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007017259

**In der Beschreibung aufgeführte Nicht-Patentliteratur**

- **BRAM BAKKER.** Reinforcement learning by backpropagation through an LSTM model/critic. *AP-PROXIMATE DYNAMIC PROGRAMMING AND RE-INFORCEMENT LEARNING, 2007. ADPR L 2007. IEEE INTERNATIONAL SYMPOSIUM,* 01. April 2007, ISBN 978-1-4244-0706-4, 127-134

- **ANDRAS ANTOS ; CSABA SZEPESVARI ; REMI MUNOS.** Learning near-optimal policies with bellman-residual minimization based fitted policy iteration and a single sample path. *Proc. of the Conference on Learning Theory,* 2006, 574-588